# EUROPEAN PATENT APPLICATION

(11) **EP 4 610 840 A1**
(43) Date of publication of application: **03.09.2025**
(21) Application number: 25157729.2
(22) Date of filing: 13.02.2025
(51) Int. Cl.: G06F 16/14, G06F 16/174, G06F 16/16, G06F 16/17

(54) **FILE MANAGEMENT SYSTEM AND METHOD**

(30) Priority: 29.02.2024 GB 202402892
(71) Applicant: Sony Interactive Entertainment Inc., Tokyo 108-0075 (JP)
(72) Inventor: CERRATO, Maurizio, London, W1F 7LP (GB); GREEN, Lawrence Martin, London, W1F 7LP (GB); LEUNG, Jun Yen, London, W1F 7LP (GB); MONTI, Maria Chiara, London, W1F 7LP (GB); CONNOR, Patrick John, London, W1F 7LP (GB); GUPTA, Rajeev, London, W1F 7LP (GB)
(74) Representative: D Young & Co LLP

(57) **Abstract**

A content obtaining system for obtaining content comprising a plurality of files, the system comprising, a database obtaining unit configured to obtain a database of unique identifiers corresponding to respective files stored by the content obtaining system, an identifier receiving unit configured to receive unique identifiers for one or more of the plurality of files in the content to be obtained, an identifier comparison unit configured to compare the received unique identifiers with the database, and to identify whether any of the identifiers match, and a content management unit configured to, in the case that there is no match for a given identifier, obtain and store the corresponding file for that identifier, and, in the case that there is a match for a given identifier, generate and store a reference to the location of the file stored by the content obtaining system for which the match was identified.

## Description

### BACKGROUND OF THE INVENTION

### Field of the invention

This disclosure relates to a file management system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

Over time there has been an increasing trend in seeking to provide content to users with a high level of visual detail; this is typically for the purpose of increasing realism or immersion within the content, such as games or movies. This has been supported by the increasing capabilities of processing devices and display devices which enable the generation and an appropriate display of such content.

One side effect of this trend is that file sizes associated with content have increased substantially over time. This can lead to significant storage requirements for content, for example due to highly detailed textures which are used to render a game; this can limit a user's ability to store content locally, or require them to purchase increasingly high-capacity storage devices. A further consideration is that the amount of time required to download such content or access times for these files may be increased.

One approach to solving such problems is that of data compression; this can reduce the size of files, thereby mitigating the issues described. However, this can place a processing burden upon a device in decompressing the content at the time of use. Similarly, data optimisation can be performed - for instance, reducing the amount of redundant data in files or the like. However, this can be time-consuming for a content creator and the advantages may not justify this investment of time.

It is therefore considered that alternative approaches to mitigating problems associated with large data requirements for content may be desirable.

It is in the context of the above discussion that the present disclosure arises.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an entertainment system;
Figure 2 schematically illustrates an installation method;
Figure 3 schematically illustrates an exemplary look-up table which stores identifier information;
Figure 4 schematically illustrates a process for removing content from a device;
Figure 5 schematically illustrates a content obtaining system for obtaining content comprising a plurality of files; and
Figure 6 schematically illustrates a content obtaining method for obtaining content comprising a plurality of files.

### DESCRIPTION OF THE EMBODIMENTS

Referring now to the drawings, wherein like reference numerals designate identical or corresponding parts throughout the several views, embodiments of the present disclosure are described.

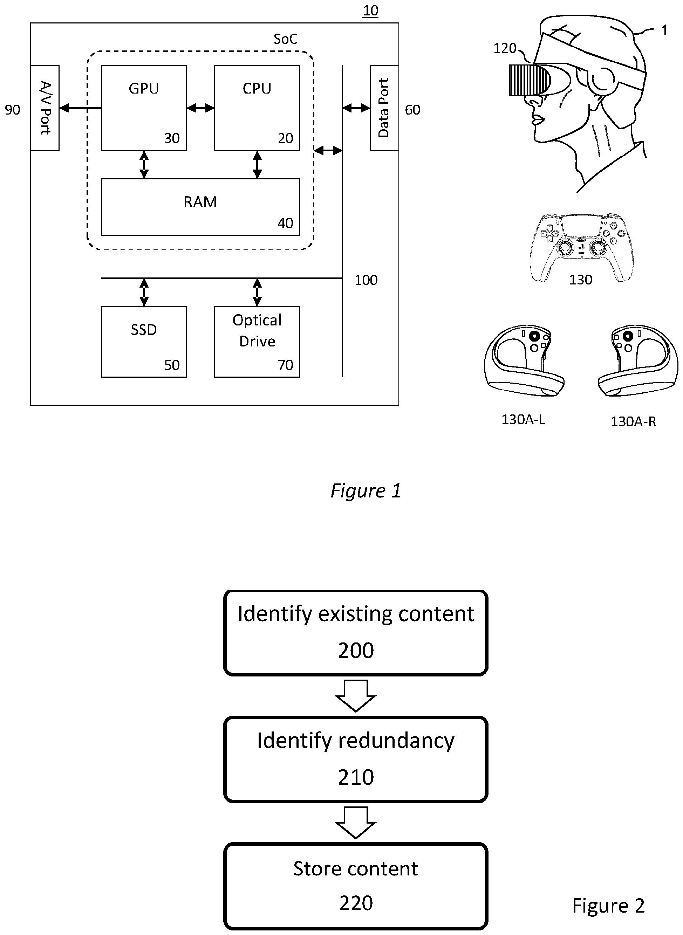

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD.

It is common with such devices to install applications prior to their execution; this comprises the storing of content for running the application locally in an accessible manner. This may be advantageous compared to obtaining content on-the-fly, such as reading it from a removable storage medium (such as a disc) or remote storage (such as a cloud server) when required, as it can reduce the latency associated with accessing such data. While advantageous in some respects, the installation of large applications and/or a large number of applications can lead to a significant data storage burden. Figure 2 schematically illustrates an installation method which may reduce such a burden.

A step 200 comprises the identification of existing content on the device performing the installation of content; one example of such an identification may be to consult a database of existing files on the device. This database includes identifiers representing each of the files (these identifiers not being file names, unless a file naming convention on a device requires that file names are unique), and optionally may include additional data such as a file location for the file corresponding to a particular identifier.

Any suitable identifier may be used to represent the files (or groups of files), however it may be considered advantageous in some cases that a hash key or value (or other unique key) is used to represent each of the stored files. This key or value is used to represent the file, but would typically not be used by the application in referencing the file - a file may have a more standard file name or the like which is used by the application. This may improve compatibility, such as through making the application more robust to files being updated (which would be expected to change a hash key).

The unique key being used as an identifier in this case should be generated on the basis of the contents of the corresponding file, rather than the file name; it would be appreciated that files having the same name do not necessarily have the some content and therefore generating keys on the basis of the file name alone would not be suitable. Any suitable method for generating unique keys to represent files can be used, with the primary requirement being that the generated keys are unique for each file.

Of course, in some cases the unique key generation may not generate unique keys with one hundred percent effectiveness - some mapping functions may give rise to the possibility of a many-to-one mapping, with such functions often offering storage or efficiency benefits. If it is considered that this is the case for a given mapping function, other information about the file may be used to confirm the correspondence between files. For example, a file size and/or file type may be considered as confirmatory characteristics when checking for redundancy, as the likelihood of the files giving rise to the same hash key in addition to having the same file type and file size may be significantly lower. The selection of confirmatory characteristics may be determined freely by the skilled person in dependence upon the mapping function; based upon the properties of the mapping function, some characteristics may be more useful as differentiating factors than other characteristics.

A step 210 comprises the identification of redundancy between the existing content and new content to be installed. In the case that hash keys or other unique keys are used, this step comprises the generation of a corresponding key for the new content (or referencing an existing stored key, such as if pre-generated hash keys are supplied as a part of the new content) and the comparison of this to entries in the database or list of existing content. Here, a 'corresponding key' refers to a unique key which is generated using the same function as that used to generate the keys for the existing content - this function may be specific to a particular content (such as a particular game series), device, and/or operating system, for example.

The identification of redundancy is performed so as to identify which parts of the new content, such as individual files or packages of files within the new content, are present on the device already (for instance, as a part of an existing installation of a similar or related game). Redundancy here refers to content that would otherwise be stored twice (or more) on the device should the new content be installed using existing methods which do not consider the content already present on the device - the second copy of the file, while being used by the new content, would not be necessary and as such could be regarded as being redundant.

In order to aid compatibility, the mapping function used to generate the unique identifiers may be defined by an operating system or device rather than on a per-content or per-developer basis. This can lead to multiple unique identifiers being provided for a single file (so as to enable multi-platform compatibility with the process described in this document), with a selection of an appropriate one of these multiple unique identifiers being performed as a part of the steps 200 and 210.

A step 220 comprises storing content which is not already present on the device, and storing a pointer towards the existing content where content is already present. In other words, parts of the new content which aren't identified as being redundant are written to local storage by the device whilst those parts which are identified as being redundant are discarded, and alternative data indicating the location of the corresponding existing content is instead stored. This pointer may use the same file name as the file which is being replaced (rather than the same identifier); this may aid compatibility in that the correspondence between the pointer and the file is improved. The execution of the pointer (that is, the use of the pointer) to locate the corresponding existing content may be implemented either by the application which is to use that content or by a system-level function.

Methods in accordance with Figure 2 provide an efficient and effective storage solution; rather than having multiple copies of the same file, redundancy can be reduced with a minimal overhead (for instance, relative to a developer manually identifying possible sources of existing content which could be utilised). The automated generation of pointers or the like which enable the existing content to be identified (without moving or copying the existing content) represents an efficient manner of accounting for the omission of files of the new content, for instance relative to the manual locating of existing content.

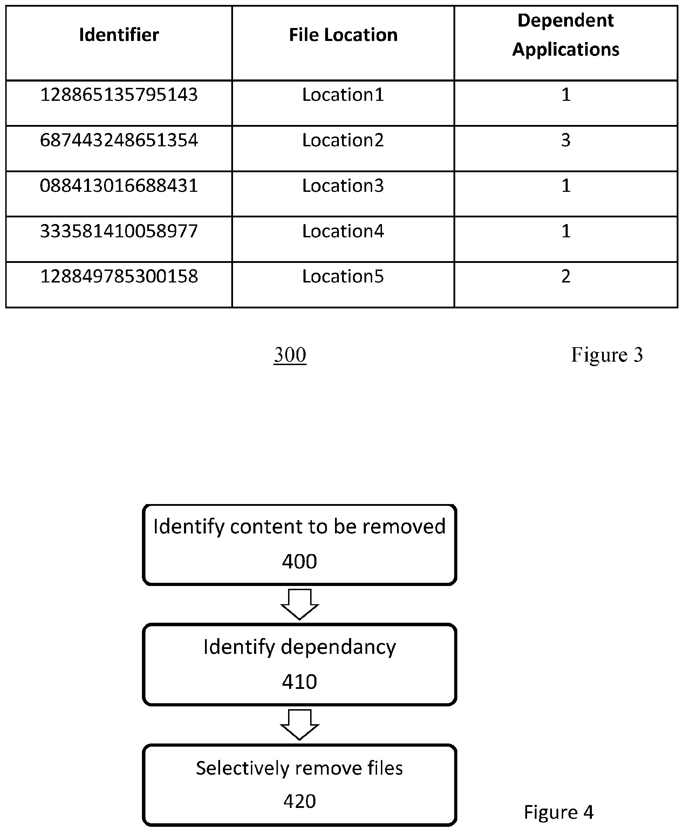

Figure 3 schematically illustrates an exemplary look-up table 300 which stores identifier information; only five lines of information are shown in this Figure, representing five files or groups of files, so as to maintain the clarity of the disclosure. In practice, it would of course be expected that a far greater number of files would be present in such a table as it would be expected that more files would be stored at a device.

The first column shows an example of identifiers - these comprise a string of fifteen digits, with a different string corresponding to each file. Of course, any suitable format of identifier could be considered - alphabetic or alphanumeric identifiers may be used instead, for example, and special symbols may be considered. The identifiers may also comprise formatting, such as different strings relating to different characteristics of a file; for instance, the first two or three digits could be used to encode a file type or at least a content type (such as 'image' or 'audio').

The second column corresponds to a file location for each of the files or groups of files. Typically it would be expected that a file path is stored in this column to enable the file(s) to be directly obtained - however in some cases a file directory or the like may be considered sufficient.

The third column is used to specify the number of applications which make use of the file(s); while in some cases a file may be used by a single application (indicated by a '1' in this column), in some cases a number of different applications may each make use of the same file(s). For instance, a family of applications (such as a social media application and a corresponding chat application) may share a number of assets (such as a logo). Information about the dependency may be generated in dependence upon the number of pointers which target the file, for instance; information about these pointers may be tracked or identified in any suitable manner.

Of course, additional information may also be provided in the reference data shown in Figure 3; the columns shown are merely exemplary, and are not intended to be limiting. Any data which can aid the identification of redundancy between files or the subsequent processing (such as generating pointers, or other processes such as those described in this document) may be considered suitable for use in this data structure. In some cases, it may be considered advantageous to store some of this data in a secondary data structure and to have limited data in a primary data structure - for instance, the identifiers may be provided in a standalone list/table with additional information being stored in a secondary data structure. This may enable a faster access time or the like for the identifiers, and/or a reduction in the processing power required to compare a new identifier with the list of existing identifiers due to the smaller file size.

Figure 4 schematically illustrates a corresponding process for removing content (as part of an application uninstallation process, for example) from a device. Such a process may include the deletion of pointers (or other references to existing files), however there is no need to consider dependency for these as the use of a first pointer to indicate the location of a second pointer would be considered inefficient - as the first pointer could be used in place of the second, avoiding the need to reference multiple pointers sequentially.

A step 400 comprises identifying content that is to be removed from the device; this may be in response to an instruction from a user to delete files, for instance, or an identification performed by an uninstaller for an application. The identification should include the obtaining of a unique key associated with each of the files.

A step 410 comprises an identification of any additional dependencies upon files (or groups of files) within the content identified for removal; in other words, this step comprises a determination of whether applications on the device which are not being removed would make use of files which form the content to be removed. This step may be implemented by consulting a reference database such as that of Figure 3, for example, in which a value of more than '1' in the 'Dependent Applications' column would indicate that a corresponding file has additional dependencies. In other implementations, a search of pointers (or the like) may be performed, or a separate database of pointer targets may be maintained.

A step 420 comprises a selective deletion of files or groups of files; more specifically, those files for which no additional dependencies are identified are removed from the storage of the device. Those files for which additional dependencies are identified are not removed, so as to enable the correct functioning of applications on the device during future operation.

In some implementations, the files which are not removed are left in their original locations on the storage of the device; however it may be considered advantageous to instead move the files to another location. In particular, this could be a movement of the file to the location of a pointer which references that file; with a corresponding deletion of that pointer and updating of any other pointers referencing that file. In the case in which multiple pointers reference the same file, the new location may be determined in any suitable manner - for instance, a location associated with an application which is used most frequently, a location associated with the most used pointer, or a location associated with the newest (most recently created) pointer. While the first option may offer the best efficiency (as the redirection would have to be navigated fewer times than if a different location were selected), the last option may be advantageous in that a newer application may be expected to remain installed for a longer period (thereby reducing the likelihood or frequency of further file movements being required).

In some cases, a file structure may be utilised which can streamline this process - in particular, a 'shared asset' folder (or folders) can be provided by an operating system or the like, in which any time a multiple-dependency upon a file is identified, the file is moved to the shared asset folder (with a corresponding pointer being generated at that time). At the time of deleting content, any files not within the shared asset folder can be deleted freely. The dependencies can be adjusted at the time of uninstalling a file, for instance, or on a routine basis such as on a weekly basis or during a manual or scheduled storage clean-up process - at which time any files with no dependencies can be deleted or and those with single dependencies can be moved. Adjustment of the dependencies can be performed by confirming the existence of corresponding pointers in known locations, for example, or by scanning the storage of the device for the existence of pointers which reference a given file.

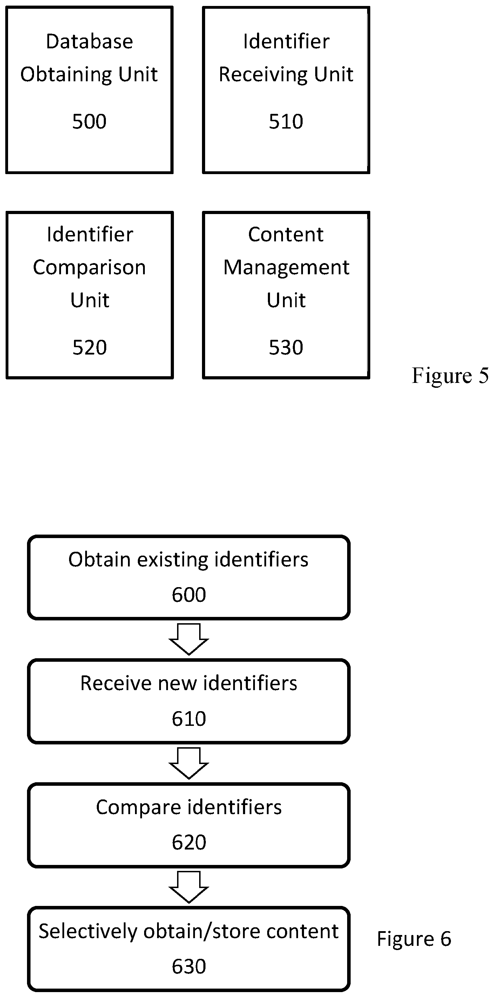

Figure 5 schematically illustrates a content obtaining system for obtaining content comprising a plurality of files, the system comprising a database obtaining unit 500, an identifier receiving unit 510, an identifier comparison unit 520, and a content management unit 530. The content may be any type of content, such as images, videos, or text files; these may be standalone files obtained directly, or may be comprised within an application or computer program such as a video game (or a portion thereof, such as an update or DLC content). This system is configured to enable an efficient content obtaining and storing method, through which duplication of data is able to be reduced in an efficient and automated manner. This system may be embodied in the entertainment system 10 of Figure 1, for example, with functionality of the units being provided by the CPU 20 (for instance), or any other computing device.

The database obtaining unit 500 is configured to obtain a database of unique identifiers corresponding to respective files stored by the content obtaining system; this may be obtained from a local storage drive, for example. Reference to a database here may be literal, in that a single database is provided, or it may be taken to refer to a plurality of databases containing similar information. The database(s) may be embodied in a look-up table, for example, or any other suitable format for representing identifier information and any additional information that is stored.

As discussed above, the unique identifiers may be derived in accordance with any suitable scheme; one example of this is using a hash function to generate hash values (or hash keys) as the unique identifiers. These identifiers are generated in dependence upon the content of a file, and as such can be considered a more reliable indicator of the contents of the file than a file name (which may be changed without varying the content of the file). One or more of the unique identifiers may be representative of a group of files instead of individual files; for instance, files which have an inter-dependence and as such are expected to always (or at least a significant proportion of the time) be provided in combination may be referenced using a single unique identifier.

Databases may include any information useful for identifying files, their locations, or for further processing to be performed. For instance, in some cases a database may comprise information about the number of applications which are dependent upon a given file - this may be useful for informing an uninstall process, for example. Further examples of information that may be stored are discussed with reference to Figure 3 above.

A given database may comprise unique identifiers for a subset of files stored by the content obtaining system, wherein the subset represents files associated with one or more particular applications (such as one or more games), one or more particular application types (such as all games and/or image editing software), or a group of files consisting of all those other than those associated with an operating system. In other words, rather than a single database being maintained for all of the files stored at a device it is considered that a database may comprise information about only some of the files (such as all installed content, and omitting system files). As noted above, the database may be one of a plurality of databases representing different files stored by the content obtaining system; the plurality of databases together may represent all or at least a substantial proportion of the files stored by a device.

The identifier receiving unit 510 is configured to receive unique identifiers for one or more of the plurality of files in the content to be obtained. These unique identifiers may be provided as a part of a manifest associated with content to be obtained that is transmitted (or otherwise obtained) in advance of the content, for example. Alternatively, content may be obtained and processing may be performed to generate unique identifiers before allocating the content to storage; this processing could instead be performed during the allocation or after it, of course. These unique identifiers should be generated using the same function (such as a hash function) as used to generate the unique identifiers for the content already stored at the content obtaining device.

In some implementations, one or more of the plurality of files in the content to be obtained may be associated with a plurality of unique identifiers, each representing a suitable file for use in place of the corresponding file in the content to be obtained, such that a match is identified by the identifier comparison unit if any of the plurality of unique identifiers is present in the database. An example use case for such a feature is that in which there are a number of files which are considered to be interchangeable; for example, if a file associated with a video game to be obtained represents a woodgrain texture to be used in a game then it may be considered that the specific woodgrain is not of particular importance. In such a case, that file may be associated with identifiers which correspond to the woodgrain textures of a plurality of other games (such as earlier games by the same developer) and any one of these may be considered to be a suitable substitute.

The plurality of unique identifiers may be determined in any suitable manner; for instance, a machine learning model may be used to identify similar textures based upon gameplay footage of a plurality of games, or they may be selected manually by a developer. Each of the plurality of unique identifiers may be provided with a priority ranking or the like (for instance, the order in which the identifiers are recorded may indicate a relative priority); this can indicate which of the existing files should be referenced in the case that multiple ones of the plurality are matched to existing files.

In some cases, not all of the files in the content to be obtained may be associated with a unique identifier; this may be due to the files being highly-specific to that content or a particular user, for example, or otherwise not being suitable for use by multiple applications. For instance, a save game file may not be associated with an identifier, and similarly files such as those containing licence keys for content may not be associated with an identifier.

The identifier comparison unit 520 is configured to compare the received unique identifiers with the database, and to identify whether any of the identifiers match between the received unique identifiers and the identifiers found within the database. Any suitable method for comparing the contents of the two (or more) lists may be utilised; a search of the database for each identifier in the received unique identifiers in turn may be performed, for instance.

In the case that multiple databases are stored by the content obtaining system, each of these may be searched for matches in turn (or simultaneously). In some cases, the content being obtained may have one or more tags or descriptors which can be used to identify appropriate ones of the databases to search - for instance, a game may be associated with the tags 'game', "first person shooter', and 'space-themed'. These tags can be compared with the databases to identify which of them is likely to comprise files which are also used by the content to be obtained. Of course, direct matches may not be required as instead the tags may be interpreted or otherwise considered more broadly - for instance, 'game' may be a subset of 'application' and as such an 'application' database may be used for comparisons. Similarly, 'space-themed' may be considered a subset of 'sci-fi' or 'futuristic', and 'first-person' may be considered to be similar enough to 'third-person' to allow such a database to be searched (whilst not searching an RTS, real-time strategy, database).

The content management unit 530 is configured, in the case that there is no match for a given identifier, to obtain and store the corresponding file for that identifier; alternatively, in the case that there is a match for a given identifier, the content management unit 530 is configured to generate and store a reference to the location of the file stored by the content obtaining system for which the match was identified.

In the first case, in which a match is not identified, this is taken as an indication that a corresponding file does not already exist at the content obtaining system. Accordingly, a copy of the file is stored at the content obtaining system.

In the second case, in which a match is identified, this is taken as an indication that a corresponding file does already exist at the content obtaining system. Accordingly, there is no need to store a new copy of the file at the content obtaining system. Instead, a reference to the location of the existing file is created and stored in place of the new file. The reference to the location of the file may be a pointer which targets the location of the file stored by the content obtaining system for which the match was identified, for instance, although any suitable format for specifying a target location may be used. The reference may be stored using the same file path as the new file would have used (albeit with a different file format, in most cases); the application which uses this file can then use the reference to locate the existing copy of the file during execution of the application. It is considered advantageous in this case that the application and/or operating system of the content obtaining device is configured so as to utilise a reference or the file directly in a flexible manner.

This content management processing may be performed during the content obtaining process (such that content is downloaded or read from external media after the comparison of identifiers), for example, or it may be performed after the content has been obtained and stored. In the latter case, files falling into the second category (no match identified) can instead be selectively deleted (rather than being selectively stored) and replaced by a reference. This may be advantageous in that a latency associated with the process can be reduced - as files can be downloaded/read without having to perform the comparison in advance.

In addition to the content obtaining process, the content management unit 530 may be configured to manage an uninstallation or other file deletion process. In particular, the content management unit 530 may be configured, in response to an instruction to remove content and/or specific files, to delete files only if it is identified that no other content is dependent upon that file (that is, files are instead retained if a dependency of other applications is identified). This dependence may be indicated in a database, as shown in the example of Figure 3, or may be determined at the time of the uninstallation/deletion by identifying references which are stored and the targets of those references.

In some implementations, files which are not deleted due to an identified dependency are moved to a new file location associated with content which is dependent upon that file, and any existing references to the original file location are updated accordingly. This can avoid a situation in which files are stored in an unclear manner - such as being located in file directories associated with applications which are no longer installed. This would also reduce the number of references to other files, thereby providing an improvement to storage efficiency (and processing efficiency for the content associated with the new file location).

The arrangement of Figure 5 is an example of a processor (for example, a GPU, and/or CPU located in a games console or any other computing device) that is operable to obtain content comprising a plurality of files, and in particular is operable to:
obtain a database of unique identifiers corresponding to respective files stored by the content obtaining system;
receive unique identifiers for one or more of the plurality of files in the content to be obtained;
compare the received unique identifiers with the database, and to identify whether any of the identifiers match;
   in the case that there is no match for a given identifier, obtain and store the corresponding file for that identifier, and
   in the case that there is a match for a given identifier, generate and store a reference to the location of the file stored by the content obtaining system for which the match was identified.

This may be implemented by the entertainment system 10 of Figure 1, for example, which shows a CPU and GPU as processing units which would be suitable for performing the disclosed functionality.

Figure 6 schematically illustrates a method for obtaining, by a content obtaining system, content comprising a plurality of files. This may be performed by the arrangement of Figure 5, for example.

A step 600 comprises obtaining existing identifiers at the content obtaining system. In other words, this step comprises obtaining a database of unique identifiers corresponding to respective files stored by the content obtaining system.

A step 610 comprises receiving new identifiers at the content obtaining system; in other words, this step comprises receiving unique identifiers for one or more of the plurality of files in the content to be obtained.

A step 620 comprises comparing the received unique identifiers with the database, and to identifying whether any of the identifiers match.

A step 630 comprises selectively obtaining and/or storing content (or obtaining and selectively deleting, as discussed above). In the case that there is no match for a given identifier, as identified in step 620, the step 630 comprises obtaining and storing the corresponding file for that identifier. Alternatively, in the case that there is a match for a given identifier identified in step 620, the step 630 comprises generating and storing a reference to the location of the file stored by the content obtaining system for which the match was identified. In the case in which the content is already stored, this latter processing also includes deleting the duplicate file which is being substituted for the reference.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A content obtaining system for obtaining content comprising a plurality of files, the system comprising:
a database obtaining unit configured to obtain a database of unique identifiers corresponding to respective files stored by the content obtaining system;
an identifier receiving unit configured to receive unique identifiers for one or more of the plurality of files in the content to be obtained;
an identifier comparison unit configured to compare the received unique identifiers with the database, and to identify whether any of the identifiers match; and
a content management unit configured to:
in the case that there is no match for a given identifier, obtain and store the corresponding file for that identifier, and
in the case that there is a match for a given identifier, generate and store a reference to the location of the file stored by the content obtaining system for which the match was identified.

2. A system according to claim 1, wherein the unique identifiers are hash values.

3. A system according to any preceding claim, wherein the database comprises unique identifiers for a subset of files stored by the content obtaining system.

4. A system according to claim 3, wherein the subset represents files associated with one or more particular applications, one or more particular application types, or a group of files other than those associated with an operating system.

5. A system according to any preceding claim, wherein the database is one of a plurality of databases representing different files stored by the content obtaining system.

6. A system according to any preceding claim, wherein one or more of the plurality of files in the content to be obtained is associated with a plurality of unique identifiers, each representing a suitable file for use in place of the corresponding file in the content to be obtained, such that a match is identified by the identifier comparison unit if any of the plurality of unique identifiers is present in the database.

7. A system according to any preceding claim, wherein the reference to the location of the file is a pointer which targets the location of the file stored by the content obtaining system for which the match was identified.

8. A system according to any preceding claim, wherein the database comprises information about the number of applications which are dependent upon a given file.

9. A system according to any preceding claim, wherein the content to be obtained is a video game.

10. A system according to any preceding claim, wherein one or more of the unique identifiers are representative of a group of files instead of individual files.

11. A system according to any preceding claim, wherein the content management unit is configured, in response to an instruction to remove content and/or specific files, to delete files only if it is identified that no other content is dependent upon that file.

12. A system according to claim 11, wherein files which are not deleted due to an identified dependency are moved to a new file location associated with content which is dependent upon that file, and any existing references to the original file location are updated accordingly.

13. A method for obtaining, by a content obtaining system, content comprising a plurality of files, the method comprising:
obtaining a database of unique identifiers corresponding to respective files stored by the content obtaining system;
receiving unique identifiers for one or more of the plurality of files in the content to be obtained;
comparing the received unique identifiers with the database, and identifying whether any of the identifiers match;
in the case that there is no match for a given identifier, obtaining and storing the corresponding file for that identifier; and
in the case that there is a match for a given identifier, generating and storing a reference to the location of the file stored by the content obtaining system for which the match was identified.

14. Computer software which, when executed by a computer, causes the computer to carry out the method of claim 13.

15. A non-transitory machine-readable storage medium which stores computer software according to claim 14.
